# EUROPÄISCHE PATENTANMELDUNG

(11) **EP 0 793 907 A2**
(43) Veröffentlichungstag der Anmeldung: **10.09.1997**
(21) Anmeldenummer: 97103174.5
(22) Anmeldetag: 27.02.1997
(51) Int. Cl.: A01B 71/06

(54) **Landwirtschaftliches einachsiges Anhängegerät**

(30) Priorität: 07.03.1996 DE 19608761
(71) Anmelder: Amazonen-Werke H. Dreyer GmbH & Co. KG, D-49205 Hasbergen (DE)
(72) Erfinder: Tiessen, Reimer-Uwe, 49076 Osnabrück (DE)

(57) **Zusammenfassung**

Landwirtschaftliches einachsiges Anhängegerät, wie beispielsweise gezogene Feldspritze etc., mit einem Fahrwerk und einer Zugdeichsel, einer auf dem Fahrwerk angeordneten, mittels zumindest einer Gelenkwelle von der Schlepperzapfwelle antreibbaren Vorrichtung. Die Vorrichtung ist oberhalb der Deichsel auf dem Fahrwerksrahmen angeordnet. Seitlich an der Deichsel ist ein doppelter Winkeltrieb befestigt, um den Antriebsstrang S bzw. Z-förmig von der oberhalb der Deichsel angeordneten Vorrichtung seitlich an der Deichsel vorbei zu einem unterhalb und seitlich der Deichsel gelegenen Gelenkwellenanschlußzapfen zu führen. Die Gelenkwelle ist an diesem Gelenkwellenanschlußzapfen angeschlossen.

## Beschreibung

Die Erfindung betrifft ein landwirtschaftliches einachsiges Anhängegerät.

Derartige landwirtschaftliche einachsige Anhängegeräte, die beispielsweise als gezogene Feldspritzen ausgebildet sind, sind in der Praxis bekannt. Diese Anhängegeräte weisen ein Fahrwerk und eine Zugdeichsel auf, die in das Anhängemaul einer landwirtschaftlichen Zugmaschine eingehängt wird. Das Zugmaul ist bei landwirtschaftlichen Zugmaschinen oberhalb des Zapfwellenanschlußes angeordnet. Diese landwirtschaftlichen Anhängegeräte weisen mittels einer Gelenkwelle von der Schlepperzapfwelle antreibbare Vorrichtungen, beispielsweise eine Pumpe auf. Diese Pumpen sind unterhalb der Zugdeichsel angeordnet und werden mittels einer Gelenkwelle über den Zapfwellenanschluß von der Schlepperzapfwelle, die unterhalb des Zugmaules angeordnet ist, angetrieben.

Nachteilig ist bei dieser Anordnung, daß die Bodenfreiheit erheblich eingeschränkt ist.

Der Erfindung liegt die Aufgabe zugrunde, bei einem mit einem Gelenkwellenantrieb ausgestatteten Anhängegerät die Bodenfreiheit erheblich zu vergrößern bzw. zu optimieren.

Diese Aufgabe wird erfindungsgemäß durch die kennzeichnenden Merkmale des Anspruches 1 gelöst. Infolge dieser Maßnahmen wird auf einfache Weise ein kostengünstiger Antrieb für eine antreibbare Vorrichtung geschaffen, die oberhalb der Deichsel auf dem Fahrwerksrahmen angeordnet ist. Durch die Anordnung der von der Schlepperzapfwelle antreibbaren Vorrichtung auf dem Fahrwerksrahmen wird die Grundvoraussetzung dafür geschaffen, daß die Bodenfreiheit des Anhängegerätes in optimaler Weise erreicht wird. Dieses ist insbesondere von Bedeutung, wenn die Feldspritze in bereits aufgewachsene Kulturen eingesetzt wird. Durch die erfindungsgemäße Anordnung des Antriebes wird ein preisgünstiger Antrieb geschaffen. Dieser neuwertige Antriebsverlauf läßt sich auch nachträglich bei sich bereits in der Praxis befindlichen, insbesondere bei Anhängegeräten mit geradlinig verlaufenden Zugdeichseln mit Ankupplung im Zugmaul des Schleppers einfach nachrüsten.

Evtl. Fluchtfehler zwischen dem Winkelgetriebe und der Antriebswelle der Vorrichtung lassen sich einfach durch ein Kreuzgelenk, welches zwischen dem Winkelgetriebe und der Antriebswelle angeordnet ist, ausgleichen.

Desweiteren ist bei einem Anhängegerät, bei dem die Deichsel mittels eines einer horizontale Gelenkachse aufweisenden Gelenkes an dem Fahrwerksrahmen angelenkt ist, vorgesehen, daß die Gelenkachse des Kreuzgelenkes mit der Gelenkachse des Gelenkes zumindest annähernd fluchtet. Infolge dieser Maßnahme kann der erfindungsgemäße Antrieb auch bei Anhängegeräten, die mittels einer steuerbaren Deichsel ausgerüstet sind, eingesetzt werden. Diese steuerbaren Deichseln werden vor allem eingesetzt, um einerseits eine Hangsteuerung und andererseits einen spurgetreuen Nachlauf der Räder des Anhängegerätes in der Spur des Zugfahrzeuges zu erreichen.

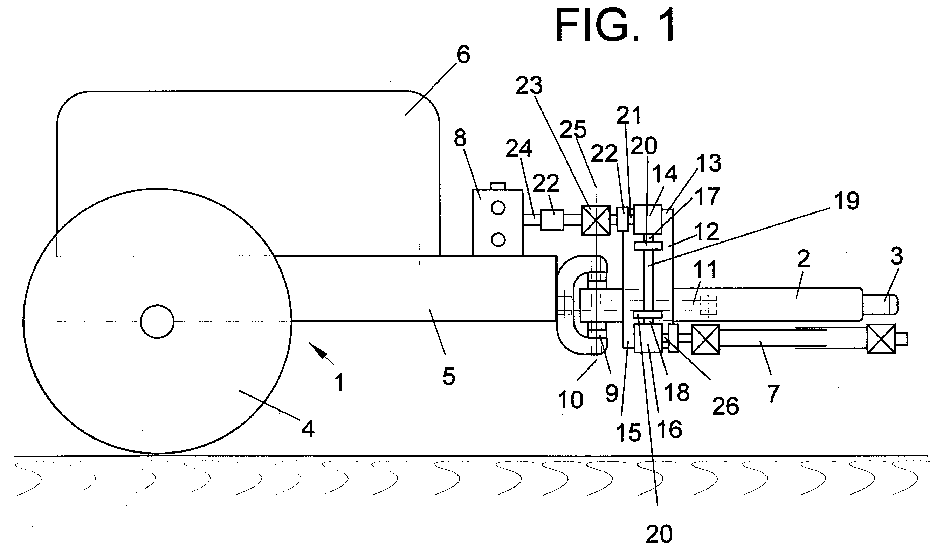

Weitere Einzelheiten der Erfindung sind der Beispielsbeschreibung und den Zeichnungen zu entnehmen. Hierbei zeigen
- Fig.1: das landwirtschaftliche Anhängegerät in der Seitenansicht und in Prinzipdarstellung und

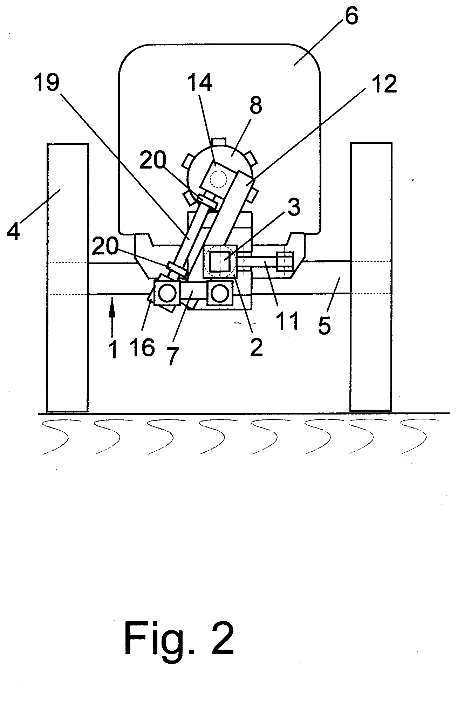

- Fig.2: das Anhängegerät in der Ansicht von vorne und in Prinzipdarstellung.

Das landwirtschaftliche einachsige Anhängegerät ist als Feldspritze ausgebildet. Die Feldspritze weist das Fahrwerk 1 und die gerade Zugdeichsel 2, die mit ihrer Zugöse 3 in ein Zugmaul eines nicht dargestellten Schleppers eingehängt wird, auf. Das Fahrwerk 1 besteht aus den Rädern 4 und dem Rahmen 5. An der Rückseite des Rahmens 5 ist ein nicht dargestelltes Spritzgestänge angeordnet. Auf dem Rahmen 5 befindet sich der Flüssigkeitstank 6. Auf der Vorderseite des Rahmens 5 ist vor dem Flüssigkeitstank 6 oberhalb der Deichsel 2 die mittels einer Gelenkwelle 7 von der Schlepperzapfwelle antreibbare Vorrichtung 8, die als Pumpe ausgebildet ist, angeordnet.

Die Zugdeichsel 2 ist mittels des Gelenkes 9 an dem Rahmen 5 angeordnet. Das Gelenk 9 weist die senkrechte Gelenkachse 10 auf. Zwischen der Deichsel 2 und dem Rahmen 5 ist das Einstellelement 11 angeordnet. Dieses Einstellelement 11 kann als Gewindespindel oder beispielsweise doppelt wirkender Hydraulikzylinder ausgebildet sein, um die Zugdeichsel 2 gegenüber dem Rahmen 5 einzustellen.

An der Zugdeichsel 2 ist das Halterungselement 12 befestigt. An dem Halterungselement 12 ist an dessen Oberseite 13 das obere Winkelgetriebe 14 und an dessen Unterseite 15 das Untergetriebe 16 befestigt. Die beiden in senkrechter Ebene ausgerichteten Wellen 17 und 18 der Winkelgetriebe 14 und 16 sind mittels einer Übertragungswelle 19 und mittels geeigneter Kupplungselemente 20 drehfest miteinander verbunden. Die Ausgangswelle 21 des oberen Winkelgetriebes 14 ist über Kupplungen 22 und einem Kreuzgelenk 23 mit der Eingangswelle 24 der Pumpe 8 kraftschlüssig verbunden. Die Gelenkachse 25 des Kreuzgelenkes 23 fluchtet mit der Gelenkachse 10 des Gelenkes 9. Die Eingangswelle 26 des unteren Winkelgetriebes 16 liegt unterhalb der Zugdeichsel 2 und ist mit der Gelenkwelle 7 verbunden, deren vorderer Anschluß mit der Schlepperzapfwelle eines nicht dargestellten Schleppers verbunden wird.

Durch den doppelten Winkeltrieb, der von den Winkelgetrieben 14 und 16 gebildet wird und seitlich der Deichsel 2 befestigt ist, wird der Antriebsstrang S- bzw. Z-förmig von der oberhalb der Deichsel 2 angeordneten Vorrichtung 8 seitlich an der Deichsel 2 vorbei zu einem unterhalb und seitlich der Deichsel 2 gelegenen Gelenkwellenanschlußzapfen 26 geführt.

## Patentansprüche

1. Landwirtschaftliches einachsiges Anhängegerät, wie beispielsweise gezogene Feldspritze etc., mit einem Fahrwerk und einer Zugdeichsel, einer auf dem Fahrwerk angeordneten, mittels zumindest einer Gelenkwelle von der Schlepperzapfwelle antreibbaren Vorrichtung, dadurch gekennzeichnet, daß die Vorrichtung (8) oberhalb der Deichsel (2) auf dem Fahrwerksrahmen (5) angeordnet ist, daß seitlich an der Deichsel (2) ein doppelter Winkeltrieb (14, 16) befestigt ist, um den Antriebsstrang S bzw. Z-förmig von der oberhalb der Deichsel (2) angeordneten Vorrichtung (8) seitlich an der Deichsel (2) vorbei zu einem unterhalb und seitlich der Deichsel (2) gelegenen Gelenkwellenanschlußzapfen (26) zu führen, daß die Gelenkwelle (7) an diesem Gelenkwellenanschlußzapfen (26) angeschlossen ist.

2. Anhängegerät nach Anspruch 1, dadurch gekennzeichnet, daß zwischen dem oberen Winkelgetriebe (14) und der Antriebswelle (24) der Vorrichtung (8) ein Kreuzgelenk (23) angeordnet ist.

3. Anhängegerät nach Anspruch 1, wobei die Deichsel mittels eines eine senkrechte Gelenkachse aufweisenden Gelenkes an dem Fahrwerksrahmen angelenkt ist, dadurch gekennzeichnet, daß die Gelenkachse (25) des Kreuzgelenkes (23) mit der Gelenkachse (10) des Gelenkes (9) zumindest annähernd fluchtet.
